# EUROPEAN PATENT APPLICATION

(11) **EP 4 250 543 A2**
(43) Date of publication of application: **27.09.2023**
(21) Application number: 23163449.4
(22) Date of filing: 22.03.2023
(51) Int. Cl.: H02K 15/02, H01F 41/02, H02K 15/12

(54) **METHOD FOR MAKING AN ELECTRIC-MOTOR COMPONENT AND RESPECTIVE APPARATUS**

(30) Priority: 22.03.2022 IT 202200005666
(71) Applicant: Sitem S.p.A., 06039 Trevi (PG) (IT)
(72) Inventor: MARINACCI, Samuel, 06039 Trevi (PG) (IT)
(74) Representative: Ercolani, Simone Pietro

(57) **Abstract**

Method for making an electric-motor component (1), preferably a stator, wherein said component comprises a plurality of planar laminations (2), each lamination of said plurality of laminations comprising one or more outer recesses (3), said method comprising the steps of:
a) combining said plurality of laminations (2) in an orderly manner by stacking along a longitudinal axis (X), in such a way that said one or more outer recesses (3) are aligned with each other so as to make one or more outer longitudinal grooves (4) for said component (1);
b) integrally and unremovably constraining said one or more laminations to each other so as to make said component;
characterised in that said step b) comprises the step b1) of distributing adhesive material (5) within said one or more outer longitudinal grooves (4) along said longitudinal axis (X).

## Description

### FIELD OF THE INVENTION

The present invention concerns a method for making an electric-motor component and respective apparatus for making it. In particular, this method is adapted to make the stators for electric motors. It should be noted, however, that the electric-motor component herein and hereinafter will be understood, in general, to mean the rotor and the stator of the same electric motor.

### KNOWN PRIOR ART

According to known art, the stators, or the rotors, of the electric motors comprise planar laminations that are combined with each other in an orderly manner by stacking along a longitudinal direction. In particular, each lamination of the plurality of laminations that make up the stator, or the rotor, comprises one or more outer recesses. This way, once the laminations are combined with each other in an orderly manner in such a way that these outer recesses are aligned with each other along the aforementioned longitudinal axis, as many outer longitudinal grooves are made as the recesses of each lamination.

Then, once combined and sorted along the chosen longitudinal direction, these laminations are integrally and unremovably constrained to each other so as to make the stator.

Several methods for unremovably constraining laminations, after they are stacked in an orderly manner with each other, are known.

A method for constraining laminations is known, which provides that semi-blanking slots (bosses) are made on the surface of the lamination inside the press, which allow contiguous laminations to be coupled to each other under pressure.

Alternatively, the method for constraining laminations can also be achieved by welding. This welding process is performed along a longitudinal direction of the outer surface of the laminations, when they are combined with each other to form a pack of stacked laminations. Preferably, the welding takes place within each of the grooves of the stator or rotor. In the event that, on the other hand, this welding is carried out along the above-mentioned longitudinal direction of the outer surface, i.e. along a generator of the electric-motor component, the weld bead shall be subjected to a final machine-tool operation in order to eliminate the metal burrs of the weld bead that would protrude with respect to the final diameter of the component to be made. These burrs would, in fact, make the coupling between stator and rotor impossible.

A further known technique for unremovably constraining laminations to each other can be achieved by gluing them. In practice, glue dosages are made inside the press in precise areas of the lamination surface in such a way that, following the step of separating the lamination, gluing between contiguous laminations takes place. The method ends as soon as the glue completely polymerises. Depending on the type of glue, it is possible that the laminations, once they are combined with each other to form a pack of stacked laminations, would have to be placed into an oven for the final polymerisation of the adhesive material.

These above-mentioned constraint methods are quite efficient and allow a firm connection between the various laminations, however, they are not without drawbacks.

In fact, the use of the packing bosses results in losses in iron due to short-circuits induced by the presence of the same bosses, as well as a deformation of the lamination resulting from the coupling between two contiguous bosses resulting in problems in the electromagnetic field generated by the component.

On the other hand, the welding process has drawbacks due to the fact that, along the welding region, local burns may locally occur or the reached high temperature may also cause material discontinuities which, subsequently, may also result in problems in the electromagnetic field generated by the component.

Finally, the gluing process eliminates the problem of electromagnetic leaks, which characterise the two solutions mentioned above, but makes the application not very flexible and subject to possible frequent machine downtime, as it is integrated inside the line.

Also known is the patent WO2019/202537A1, in the name of EURO GROUP SPA, which describes a lamellar pack comprising a plurality of opposed laminations provided with at least one through opening and a plurality of shaped through openings adapted to define a seat for housing stator windings when the lamellar pack is assembled. The single laminations are provided with through pockets formed on the surface of the laminations from the outer peripheral edge toward the opening. When the single laminations are superimposed on each other to define the lamellar pack, the single pockets superimposed on each other define a niche extended longitudinally according to an axial direction along the entire length of the lamellar pack. These longitudinally extending niches define a seat for housing an assembling a means for assembling laminations with the function of solidifying so as to define said lamellar pack. The assembling means for assembling laminations are made of an adhesive material of plastic or rubber and/or thermosetting nature and comprise materials adapted to reinforce the mechanical strength of the lamellar pack, while equipping it with electrical insulation to prevent the occurrence of short circuits.

Finally, the patent US2021/226515 is also known in the name of NISHIKAWA YUKIO, which describes an electric motor that includes a stator. This stator comprises an assembly of soft magnetic alloy strips which are laminated and which is fastened to a base by means of a bolt which penetrates into the laminated assembly in a lamination direction of the soft magnetic alloy strips. In addition, the motor also comprises a rotor rotatably installed on the base. According to the solution described in the patent, a layer of resin is applied to a laminated end surface closest to the bolt, in the laminated end surface of the stator.

In light of the above, object of the present invention is to implement a method of manufacturing an electric-motor component, preferably the stator, which is an alternative to those already known but which avoids the drawbacks of known methods.

In particular, object of the present invention is to implement a method that ensures optimum retention of the constraint between the stator, or rotor, laminations, and which, at the same time, is still rapid, flexible and cost-effective.

Finally, object of the present invention is to make also an apparatus that is able to implement the method object of the invention.

### SUMMARY OF THE INVENTION

These and other objects are achieved by means of a method for making an electric-motor component, preferably the stator of the electric motor, wherein said component comprises a plurality of planar laminations, each lamination of said plurality of laminations comprising one or more outer recesses, said method comprising the steps of:
a) combining said plurality of laminations in an orderly manner, by stacking, along a longitudinal, preferably barycentric, axis in such a way that said one or more outer recesses are aligned with each other so as to make one or more outer longitudinal grooves;
b) integrally and unremovably constraining said one or more laminations to each other so as to make said component for said electric motor;
characterised in that said step b) comprises the step b1) of distributing adhesive material within said one or more outer longitudinal grooves along said longitudinal axis.

This solution solves the problems of the methods of making electric-motor components of known art. Indeed, the holder noted that the use of the adhesive material, in particular anaerobic UV glue or UV epoxy acrylic glue, in any case glue not containing cyanoacrylate, allows to achieve a level of tensile strength of the final component that is entirely similar to that achievable through some of the known constraint processes, such as e.g. the one made through the bosses.

This solution further allows to perform, in a more flexible and simple manner than known techniques, the step of constraining, by gluing, the laminations, and at a much convenient cost.

According to an embodiment of the method, following said step b1), the step c) of heating said adhesive material applied during said step b1) is comprised, to activate its polymerisation.

In particular, following said step b1) and before said step c), the step d) is comprised of angularly rotating said component, preferably said stator, around said longitudinal axis if barycentric for said stator, from a first angular position, in which said step b) takes place, to at least one second angular position which is different from said first position, at which said step c) takes place. Said rotation preferably takes place intermittently in such a way that, in said first angular position and in said at least one second angular position, the rotation of said component is interrupted, preferably for a period between 1 and 15 seconds, also depending on the longitudinal extent of the pack of stacked laminations. This allows the adhesive material to be distributed along one of the grooves, while the same adhesive material distributed during the previous step in another groove is subjected to heat for its polymerisation at one or more of the second positions. Since the polymerisation time of the adhesive material is longer than the distribution time of the same adhesive material during step b1), then step c) takes place in multiple steps, each at a second angular position. Whenever, therefore, the rotation of the component object of the method takes place in such a way that a groove, along which the adhesive material has been distributed, moves from the first angular position to a second angular position, a new groove of the component will be located at the first angular position for the distribution of the adhesive material along such groove, whereas the previous groove(s) will be positioned at one or more of the second angular positions.

Again, the number of second angular positions reached by said electric-motor component during said step c) is equal to the number of said one or more longitudinal grooves decreased by one. Step c) is completed when a generic groove has been reached along which the adhesive material has been administered to all the second angular positions. In each of these angular positions, the adhesive material will be heated for the time required to allow the adhesive material to be fully distributed within the groove that is in the first angular position at that time.

Furthermore, said step c) is achieved by the administration of ultraviolet radiation, i.e. by at least one UV lamp.

According to a first embodiment of the invention, said longitudinal, preferably barycentric, axis is vertically arranged at least during said step b1). In this case, step d) could also not take place or, in any case, could take place with barycentric axis arranged vertically. In this embodiment, step a) could also take place with vertical longitudinal axis.

In accordance with a second embodiment of the invention, at least during said step b 1, said longitudinal axis is arranged horizontally. Preferably, if the longitudinal axis is also barycentric, step d) also takes place with a barycentric longitudinal axis arranged horizontally. Still preferably, if the longitudinal axis is also barycentric, step c) also takes place with a barycentric longitudinal axis arranged horizontally.

In this embodiment, step a) preferably takes place with vertical barycentric longitudinal axis.

In accordance with the embodiment in which during said step d) the barycentric longitudinal axis is horizontal, said first angular position is facing upwards; said first angular position is preferably arranged at the angle of rotation for said component in which a vertical plane passes through said barycentric longitudinal axis and in which said vertical plane symmetrically divides said at least one groove of said one or more grooves in which said step b1) takes place.

Again, each longitudinal groove has an open polygonal profile, preferably U-shaped; said open polygonal profile comprises at least one radially innermost face and at least two side faces, said step b1) being carried out at least along said innermost face. In accordance to another embodiment, the distribution of the adhesive material may also take place along the side faces as well as on said one or more radially innermost faces.

In accordance with a further embodiment of the invention, wherein said plurality of laminations of said electric-motor component comprises an upper lamination and a lower lamination, the method provides that said step b1) and said step c) take place, for each groove, starting from said upper lamination of said component until it reaches, along a linear path, said lower lamination of said component, or vice versa, preferably all the grooves of said one or more grooves of said component are subjected simultaneously to said step b1) and said step c).

In practice, the adhesive material is not distributed during step b1) over the entire groove at the same time but starting from the upper lamination until it reaches the lower lamination. In addition, the heating of the adhesive material is carried out immediately after the adhesive material has been distributed in the groove.

The objects are also achieved by means of an apparatus for making an electric-motor component, preferably a stator, comprising a plurality of laminations, each having one or more outer recesses, said apparatus comprising means for combining, in an orderly manner by stacking, said laminations of said plurality of laminations along a first longitudinal axis in such a way that said one or more outer recesses are aligned with each other so as to make one or more outer longitudinal grooves, and means for integrally and unremovably constraining said one or more laminations in such a way as to make said component for said electric motor, said apparatus being characterised in that said constraining means comprise at least one distributing device for distributing adhesive material within said one or more outer longitudinal grooves along said longitudinal axis.

Again, the apparatus comprises heating means for heating said adhesive material.

Furthermore, in the event where this longitudinal axis is also barycentric for said component, the apparatus comprises rotation means for angularly rotating said component around said barycentric longitudinal axis from a first angular position, in which said distributing device for distributing adhesive material distributes adhesive material within said one or more grooves along said barycentric longitudinal axis, and at least one second angular position which is different from said first angular position, in which said heating means heat said adhesive material applied in said first angular position to assist its polymerisation.

According to a preferred embodiment of the invention, said rotation means operate intermittently, by interrupting the rotation at said first angular position and at said at least one second angular position.

In particular, said heating means comprise one or more ultraviolet lamps, wherein the number of said ultraviolet lamps is preferably equal to the number of said one or more grooves decreased by one, and wherein each of said ultraviolet lamps is arranged at the respective second angular position of said one or more second angular positions.

Finally, said barycentric rotation axis is arranged horizontally or vertically. In particular, said means of rotation preferably generate the rotation of the component to be made around said barycentric longitudinal axis arranged horizontally.

In accordance with a further embodiment of the invention, the apparatus comprises a number of distributing devices equal to the number of said grooves.

In this embodiment, the number of said one or more ultraviolet lamps of the heating means is at least equal to the number of said grooves, so that at least one ultraviolet lamp of said one or more ultraviolet lamps will be combined with the respective groove. This means that for each groove there will be at least one distributing device for distributing adhesive material and at least one ultraviolet lamp. In practice, an embodiment in which a distributing device and two or more UV lamps are present for each groove of the component would nevertheless fall within the protection scope of the present invention.

Again, said plurality of laminations of said electric-motor component comprises an upper lamination and a lower lamination. The apparatus comprises one or more assembling units in a number equal to said one or more grooves, each assembling unit is combined with a groove and comprises at least one distributing device and at least one ultraviolet lamp. According to this embodiment, said at least one distributing device and said at least one lamp are integrally constrained to said assembling unit and are oriented in the direction of said groove, and the apparatus further comprises means for sliding each assembling unit parallel to the groove with which it is combined, starting from the upper lamination of said component until it reaches, along a linear path, said lower lamination of said component, in such a way that said distributing device can distribute said adhesive material within said at least one groove and said at least one ultraviolet lamp can polymerise said adhesive material distributed while said assembly unit slides along said groove. Preferably, said at least one ultraviolet lamp is arranged above said distributing device for distributing adhesive material.

Finally, said sliding means comprise, for each assembling unit, at least one guide and at least one carriage sliding along said guide, wherein said assembling unit is integrally constrained to the respective carriage.

In this further embodiment, the longitudinal axis of the component, which is also the barycentric axis, is preferably arranged vertically. This longitudinal axis, unlike the other embodiment, is not rotational for the passive component.

These and other aspects of the present invention will be made clearer by the following detailed description of a preferred embodiment provided herein only by way of non-limiting example, with reference to the accompanying figures, wherein:
Figure 1 is an axonometric view of the laminations of an electric-motor stator, which are not yet combined together;
Figure 2 is an axonometric view of the stator of figure 1, whose laminations have been combined;
Figure 3 is an axonometric view of the stator of figure 2 in which adhesive material has been distributed along the outer grooves;
Figures 4A show a partial sectional view of the stator obtained according to the invention of a first embodiment of groove;
Figure 4B shows a partial sectional view of the stator obtained according to the invention of a second embodiment of groove;
Figures 5A to 5D show frontal schematic views of the stator of figure 2 during the several steps of a first embodiment of the method for making the stator according to the invention, as well as of the respective apparatus for making a stator according to this first embodiment of the invention;
Figure 6A shows an axonometric view of a further embodiment of an apparatus for making an electric-motor component, in which the assembling unit are arranged in such a way as to start the method of making the component from the upper lamination;
Figure 6B shows an axonometric view of the apparatus of figure 6A, in which the assembling unit has been displaced downwards during the method of making the electric-motor component;
Figure 6C shows an axonometric view of the apparatus of figure 6A, in which the assembling unit has been displaced to the final position, i.e. in the proximity of the lower lamination, during the method of making the electric-motor component;
Figure 6D shows a partial sectional view of the apparatus of figure 6A.

### DETAILED DESCRIPTION OF A PREFERRED EMBODIMENT OF THE PRESENT INVENTION

With particular reference to these figures, 100 denotes an apparatus according to the invention in accordance with a first embodiment and 1 denotes the electric-motor component that is made. In particular, the component 1 is a stator.

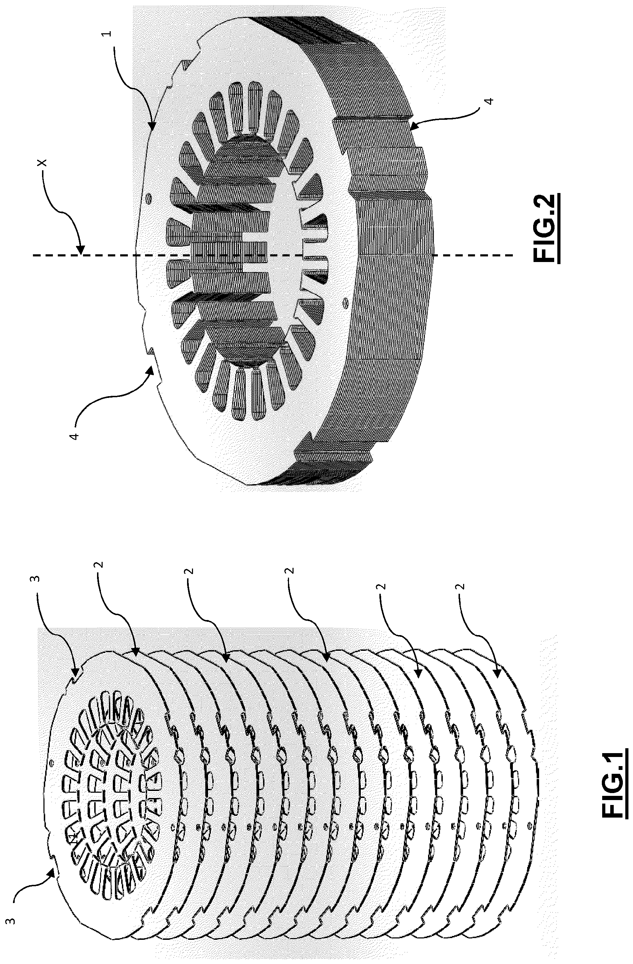

With reference to figure 1, the set of laminations 2 is shown, which are used to be combined in an orderly manner, by stacking, along a first longitudinal axis X. These laminations 2 each comprise four outer recesses 3.

In Figure 2 it can be seen that, once these laminations 2 are combined with each other, by stacking, for making a pack of laminations, the four outer recesses 3 of each lamination 2 are aligned with each other so as to make four outer longitudinal grooves 4. It should be noted that, although four recesses 3 and, therefore, four outer grooves 4 have been disclosed herein, a plurality of laminations 2 would nevertheless fall within the protection scope of the present invention, in which each lamination comprises only one outer recess 3 or a number of outer recesses other than four and, therefore, capable of making a corresponding number of outer grooves 4.

The method of making the stator 1 for an electric motor, in which the stator, as seen above, comprises a plurality of planar laminations 2, wherein each lamination 2 comprises four outer recesses 3, provides the steps of:
a) combining in an orderly manner, by stacking, the plurality of laminations 2 along a first longitudinal axis X (see figures 1 and 2), in such a way that the outer recesses 3 are aligned with each other so as to make a corresponding number of outer longitudinal grooves 4; and
b) integrally and unremovably constraining the laminations 2 to each other in such a way as to make the component 1.

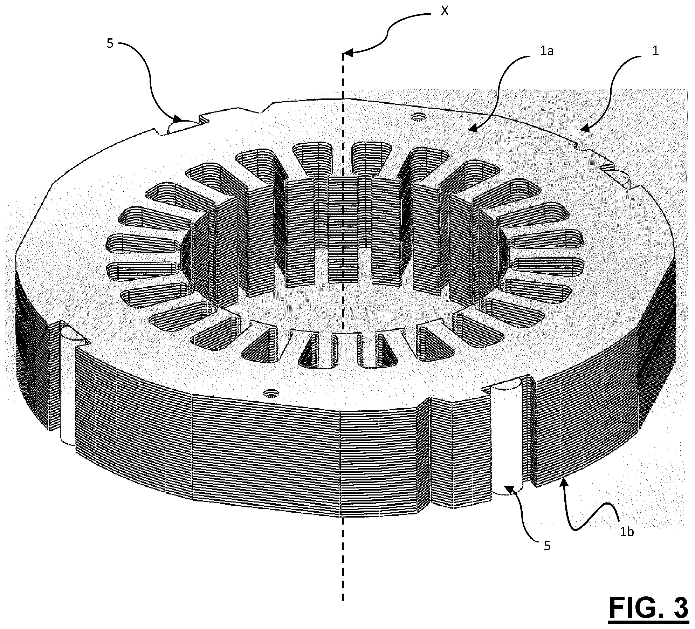

Advantageously, step b) comprises step b1) of distributing adhesive material 5 within the outer longitudinal grooves 4 along the longitudinal axis X (see figure 3 and figures 5A to 5D and 6A to 6C).

This last step b1) thus allows the laminations 2 that make up the stator 1 to be firmly joined to each other, thus producing a tensile strength equal to the one that can be achieved by some traditional packing methods, such as e.g. the one in which bosses are used.

Following step b1), step c) of heating the adhesive material applied during step b1) to activate its polymerization, is comprised.

The adhesive material comprises either an anaerobic UV glue or, alternatively, an UV epoxy acrylic glue, both of which are devoid of cyanoacrylate.

According to a particular embodiment of the invention shown in figure 3, the longitudinal axis X is arranged vertically during steps a), b1) and c).

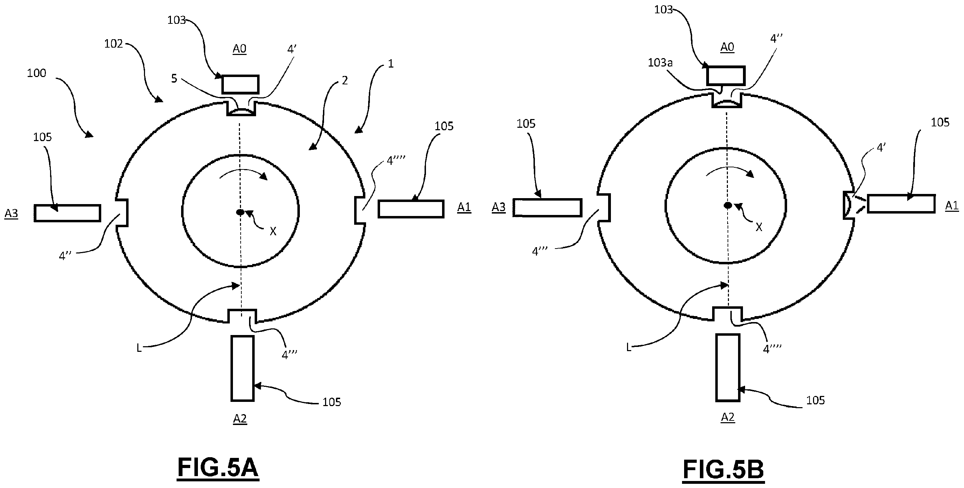

In accordance with an alternative embodiment shown in figures 5A to 5D, the longitudinal axis X is arranged horizontally during steps b1) and c). The step a) can also take place with vertical longitudinal axis X or, alternatively, with horizontal axis.

In particular, in accordance with this latter embodiment mentioned above, the longitudinal axis X may be barycentric. In this case, following step b1) and before said step c), the step d) of rotating the stator 1 angularly around the barycentric longitudinal axis X, from a first angular position A0 in which step b) takes place, to three second angular positions A1, A2, A3 different from the first angular position A0, at which said step c) takes place, is comprised. The four angular positions A0, A1, A2 and A3 are in the embodiment described herein at 90°. The rotation of the stator 1 takes place intermittently such that when the stator 1 reaches the first angular position A0 and the second angular positions A1, A2, A3, the rotation of the same stator is interrupted. This temporary interruption, in the embodiment described herein, lasts about 3 seconds, i.e. the time in which step b1) of the method is carried out.

Additionally, the number of second angular positions A1, A2, A3 reached by the stator 1 during step c) is equal to the number of longitudinal grooves 4 decreased by one. The step c) is, therefore, completed when the last second angular position A3 of the three second angular positions A1,A2,A3 is reached. In practice, for the particular embodiment described herein, in which there are four longitudinal grooves 4 for which step b1) of the method takes place, the step c) lasts in total about 9 seconds.

It should be clarified that the duration of step b1) depends on multiple factors and it is between 1 and 15 seconds, without thereby departing from the protection scope of the present invention.

Additionally, step c) is achieved by the administration of ultraviolet radiation.

As shown in figures 5A-5D, the first angular position A0 is facing upwards. In particular, the first angular position A0 is arranged at the rotation angle for the stator 1 in which a vertical plane L (orthogonal to the sheet) passes through the barycentric longitudinal axis X (orthogonal to the sheet) and in which the vertical plane L symmetrically divides the groove 4 in which step b1) takes place.

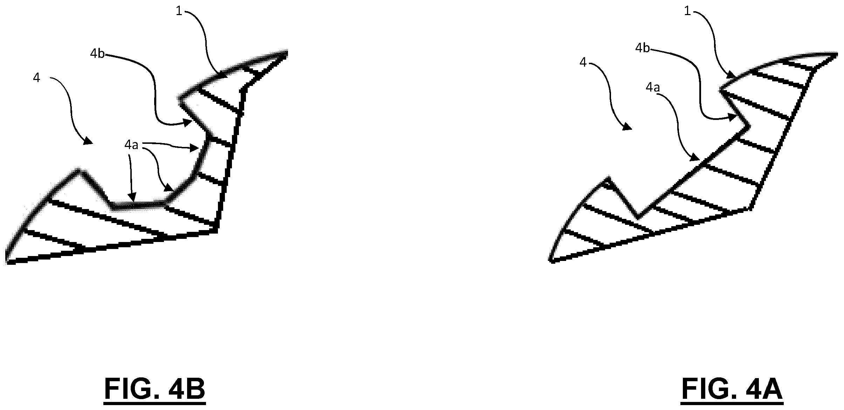

Finally, each longitudinal groove 4 has an open polygonal profile. This open polygonal profile, which in this case is U-shaped (see figure 4A), comprises a radially innermost face 4a and at least two side faces 4b. In the embodiment described herein, during step b1), the adhesive material is distributed only along the part of the radially innermost face 4a, however in an alternative embodiment of the invention, the adhesive material can also be distributed along the side faces 4b. In this latter case the holder noted that, for the same number of grooves 4, the tensile strength of the final component can even increase by double, in this case of the stator 1.

Figure 4B shows a particular open polygonal profile of the generic groove 4 in which there are three radially innermost faces 4a and two side faces 4b.

It should also be mentioned that, in the embodiment in which the longitudinal axis X is arranged vertically, in the event that step d) is comprised, then the longitudinal axis X coincides with the barycentric axis around which the rotation of the component 1 takes place for carrying out steps b1) and c).

In the accompanying figures 5A to 5D, in a very simplified way, the apparatus 100 for making the stator 1 for electric motor is also shown.

This apparatus 100 comprises a plurality of laminations 2 each having four outer recesses 3. It should be mentioned that a component different from the stator, such as e.g. a rotor, and having a number of recesses 3 other than four, e.g., only one or a number other than four, would still fall within the protection scope of the present invention.

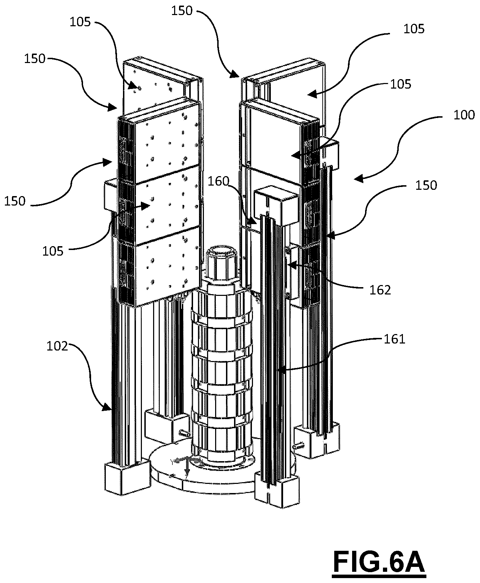

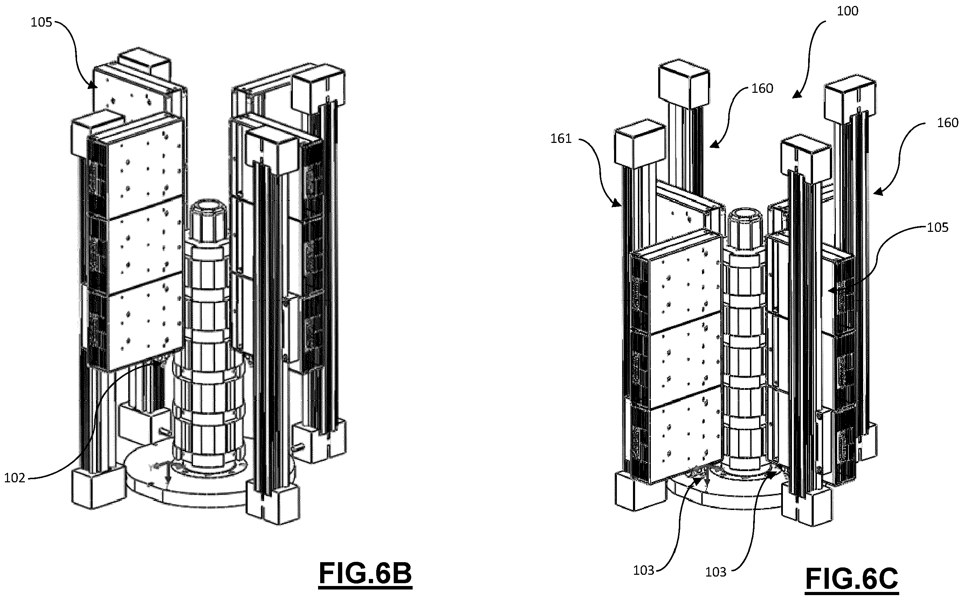

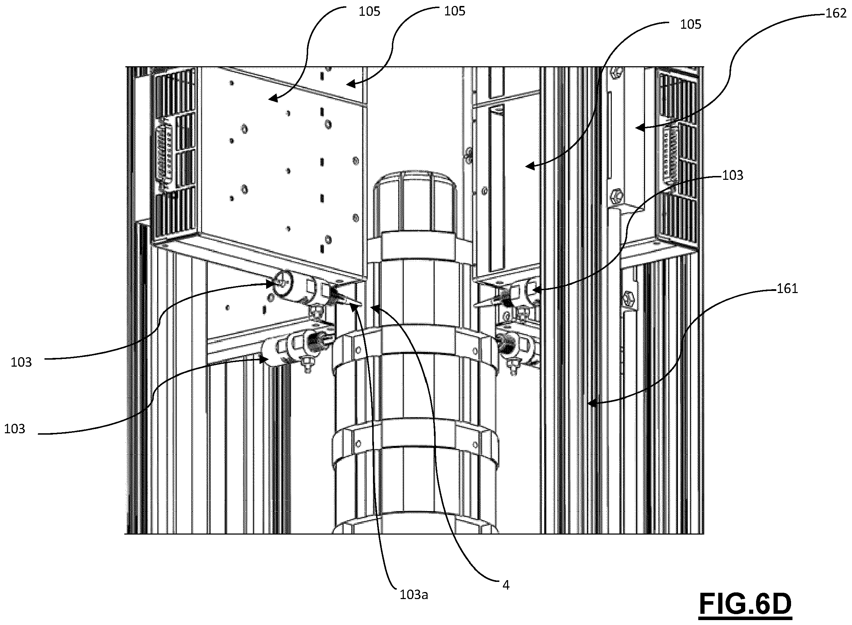

The apparatus 100 comprises means for combining in an orderly manner, by stacking, the laminations 2 of the plurality of laminations along a barycentric longitudinal axis X, in such a way that the outer recesses 3 are aligned with each other so as to make four outer longitudinal grooves 4 for the stator 1. It should be noted that the number of grooves 4 is equal to the number of recesses 3 present on each lamination 2. The above-mentioned means for combining the laminations 2 in an orderly manner are not shown in the accompanying figures as they are known to the person skilled in the art. The apparatus 100 further comprises means 102 for integrally and unremovably constraining the laminations 2 to each other in such a way as to make the component 1. Advantageously, the constraining means 102 comprise a device 103 for distributing adhesive material along the outer longitudinal grooves 4. In the embodiment described herein, there is only one distributing device 103 which comprises only one nozzle 103a and slides parallel to the barycentric longitudinal axis X, facing the groove 4 along which the adhesive material must be distributed. In any case an embodiment, not shown herein, in which the distributing device 103 is fixed and comprises a plurality of nozzles 103a arranged spaced parallel to the barycentric longitudinal axis X and facing the groove 2 along which the adhesive material must be distributed, in any case would fall within the protection scope of the present invention. Furthermore, even an embodiment shown herein in figures 6A to 6D, in which the number of distributing devices 103 is equal to the number of grooves 4, would still fall within the protection scope of the present invention.

Furthermore, the apparatus 100 comprises heating means 105 for heating the adhesive material.

The heating means 105 are of the ultraviolet type, i.e. they comprise ultraviolet lamps.

In accordance with the above-mentioned further embodiment shown in figures 6A to 6D and which will be described in more detail below, in which the number of distributing devices 103 is equal to the number of grooves 4, a number of ultraviolet lamps 105 at least equal to the number of grooves 4 could be provided, all of which falling within the protection scope of the present invention.

In accordance with the embodiment shown in figures 5A-5D, in which there is only one distributing device 103, the number of ultraviolet lamps 105 is equal to the number of grooves 4 decreased by one. In practice, the UV ultraviolet lamps 105 used are three.

In this last embodiment, the apparatus 100 comprises rotation means for rotating the stator 1 angularly around the barycentric longitudinal axis X for the same stator 1. These rotation means are not shown herein but are known to the person skilled in the art.

In the case described herein, this barycentric rotation axis X is arranged horizontally. In another embodiment not shown herein, this barycentric axis X could be arranged vertically, without thereby departing from the protection scope of the present invention.

The angular rotation means rotate the stator 1 around the horizontal barycentric longitudinal axis X from a first angular position A0, in which the distributing device 103 for distributing adhesive material distributes adhesive material along the grooves 4, to a plurality of second angular positions A1, A2, A3 different from the first position, in which said heating means 105 heat the adhesive material applied in the first angular position A0 to assist its polymerisation. In practice, with the stator 1 at the first position A0, the distributing device 103 distributes adhesive material along a first groove 4' (figure 5A), so as to perform step b1) of the method. For the sake of clarity, the grooves 4 hereinafter will each be denoted with their own specific reference 4', 4",4'" and 4"", although they are completely identical. In this case, the distributing device 103 is at the groove along which the adhesive material should be distributed, i.e. the groove 4'. During the rotation of the stator 1, e.g. clockwise, the groove 4", following the one along which the adhesive material is first distributed, i.e. the groove 4', is at the first angular position A0, whereas the one that was previously in the first angular position A0, i.e. the groove 4', is in the first position A1 of the second angular positions A1,A2,A3 (see figure 5B). In this position the heating devices 105 are activated for heating the adhesive material 5 distributed in the groove 4', i.e. the ultraviolet lamp turns on.

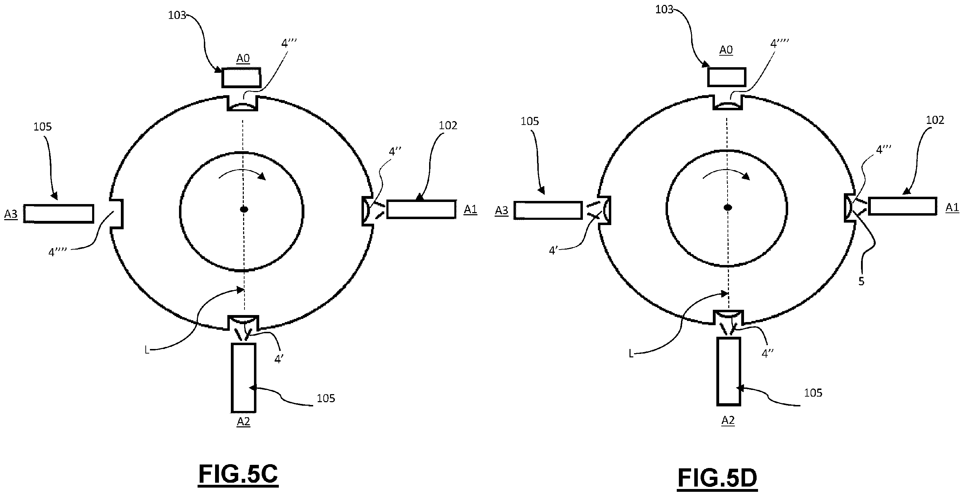

Then, during the rotation of the stator 1 around the longitudinal axis X, this groove 4' which first received the adhesive material will be in the two further second angular positions A2 and A3 (see figures 5C and 5D). At these angular positions A2 and A3, the ultraviolet lamps 105 arranged at the second positions A2 and A3 will subsequently turn on. During these passages and, therefore, during the clockwise rotation of the stator 1, there will always be a new groove 4"', 4"" which will be in the first angular position A0 for distributing adhesive material, whereas the grooves 4' and 4" in which the adhesive material 5 was previously distributed, will be at different times at the three second angular positions A1, A2 and A3. In particular, at the moment when the last clockwise groove, i.e. the groove 4"", after having reached the first angular position A0 will also have reached the remaining second angular positions A1, A2 and A3, the method of the present invention will be completed. These passages are not visible in the accompanying figures but can be deduced from the operation of the previous steps.

Preferably, the rotation means operate intermittently, thus interrupting the rotation of the stator 1 at the first angular position A0 and, therefore, the second angular positions A1, A2, A3. This allows the adhesive material to be distributed at the groove that faces the distributing means 103 for distributing adhesive material.

In this case, the number of ultraviolet lamps 105 is, therefore, equal to the number of grooves 4 decreased by one. Each of said ultraviolet lamps is arranged at the respective second angular position A1, A2, A3 of the three second angular positions in order to perform step c) of the method. As mentioned above, at least initially their switching on can take place in subsequent steps, until the first groove 4' has reached the last second position A3, at which point these lamps can remain switched on until the end of step c) of the method.

As mentioned above, figures 6A to 6D show a further embodiment of the invention of the apparatus 100 for making an electric-motor component 1, in particular a stator. This apparatus 100, as in the previously described embodiment, comprises a plurality of laminations 2 each having outer recesses 3, specifically four. In addition, the apparatus 100 comprises means for combining, in an orderly manner by stacking, the laminations 2 of the plurality of laminations along a longitudinal axis X in such a way that the outer recesses 3 are aligned with each other so as to make outer longitudinal grooves 4 for the component 1. In the embodiment shown in figures 6A to 6D, the longitudinal axis X is arranged vertically. In this case, moreover, the number of grooves 4 will be equal to the number of recesses present on each lamination. Still the apparatus 100 further comprises constraining means 102 for integrally and unremovably constraining the laminations 2 to each other in such a way as to make the electric-motor component 1. In the embodiment described herein in figures 6A to 6D and unlike that described in figures 5A to 5D, the constraining means 102 comprise a number of distributing devices 103 for distributing adhesive material within the outer longitudinal grooves 4 along the longitudinal axis X, equal to the number of grooves 4, i.e. four distributing devices 103. This apparatus 100, as the one described in figures 5A to 5D, also comprises heating means 105 for heating the adhesive material. These heating means 105 are of the ultraviolet type, i.e. they comprise ultraviolet lamps.

In accordance with the above-mentioned further embodiment, the number of ultraviolet lamps 105 is three for each groove 4. However, as mentioned above, in this embodiment the number of ultraviolet lamps 105 is at least equal to the number of grooves 4 and at least one ultraviolet lamp 105 is combined with each groove 4.

As shown in figure 3, the plurality of laminations of the electric-motor component 1 comprises an upper lamination 1a and a lower lamination 1b. Advantageously, according to the embodiment of figures 6A-6D, the apparatus 100 comprises a number of assembling units 150 equal to the number of grooves 4. In the embodiment described herein, the number of grooves 4 is four, thus the number of assembling units 150 is four. Each assembling unit 150 is combined with a groove 4 and comprises a distributing device 103 and three ultraviolet lamps 105. In embodiments not shown herein, the number of ultraviolet lamps 105 combined with the respective assembling unit 150 may also be different, i.e. of a single lamp 105, of two lamps or of a number of lamps 105 greater than three, without thereby departing from the protection scope of the present invention.

Furthermore, both the distributing device 103 and the three ultraviolet lamps 105 are integrally constrained to the assembling unit 150 and are oriented in the direction of the groove 4. In addition, the apparatus 100 further comprises sliding means 160 for sliding each assembling unit 150 parallel to the groove 4 with which the assembling unit 150 is combined, starting from the upper lamination 1a of the component 1 until it reaches, along a linear path, the lower lamination 1b of the component, in such a way that the distributing device 103 can distribute the adhesive material within the groove 4 and the ultraviolet lamps 105 can polymerise the adhesive material distributed when the assembling unit 150 slides along the groove 4. In the embodiment described herein, the ultraviolet lamps 105 are arranged above the distributing device 103 for distributing adhesive material since the assembling unit, to which the distributing device 103 and the ultraviolet lamps 105 are integrally constrained, proceeds from the upper lamination 1a to the lower lamination 1b.

Additionally, the sliding means 160 comprise, for each assembling unit 150, a guide 161 and a carriage 162 for the respective assembling unit 150. This carriage 162 is sliding along the respective guide 161 and the respective assembling unit 150 is integrally constrained to the carriage 162.

The method associated with this embodiment shown in figures 6A to 6D is also different from the making method associated with the embodiment of figures 5A-5D.

In particular, the method for making an electric-motor component 1, preferably a stator, wherein said component comprises a plurality of planar laminations 2 and wherein this plurality of laminations of the electric-motor component comprises an upper lamination 1a and a lower lamination 1b, and each lamination of this plurality of laminations comprises outer recesses 3, comprises the steps of:
a) combining this plurality of laminations 2 in an orderly manner, by stacking, along a longitudinal axis X, in such a way that the outer recesses 3, which in the example of the embodiment are in a number of four, are aligned with each other so as to make one or more outer longitudinal grooves 4 for the component 1, which in the example of the embodiment are in a number of four;
b) integrally and unremovably constraining the laminations 2 to each other in such a way as to make the component 1;
wherein the step b) comprises the step b1) of distributing adhesive material 5 within the outer longitudinal grooves 4 along the longitudinal axis X.

It should be emphasised that this distribution may also take place by following a trajectory not parallel to the axis X. Indeed, the grooves 4 could also be arranged along an axis not parallel to the axis X.

In addition, following step b1), step c) of heating the adhesive material applied during said step b1) to activate its polymerisation, is comprised.

Again, this step c) is achieved by the administration of ultraviolet radiation.

According to this embodiment, preferably, both during step b1) and during step c), the longitudinal axis X is arranged vertically.

Furthermore, this adhesive material comprises UV anaerobic glue or UV epoxy acrylic glue.

Advantageously, step b1) and step c) take place, for each groove 4, starting from the upper lamination 1a of the component 1 until reaching, along a linear path, the lower lamination 1b of the component or vice versa. In practice, they take place by the sliding the distribution of the adhesive material and heating the same adhesive material just distributed. Preferably, all the grooves 4 of the component 1 are simultaneously subjected to steps b1) and c).

Figures 6A-6C show the various positions reached by the four assembling units 150 while they slide along the respective guides 161 following a linear path, by means of the respective carriages 162.

During this sliding of each assembling unit 150, the respective distributing device 103 for distributing adhesive material is displaced from the upper lamination 1a to the lower lamination 1b. At the same time the ultraviolet lamps 105, which are arranged above the distributing device 103, heat the adhesive material that has just been introduced and applied into the groove 4, so that the polymerization process of the same adhesive material can be started and ended as soon as possible.

When the assembling unit 150 reaches the lower lamination 1b, the process of distributing b1) the adhesive material and heating c) the same adhesive material is basically concluded at each groove 4.

## Claims

1. Method for making an electric-motor component (1), preferably a stator, wherein said component comprises a plurality of planar laminations (2), each lamination of said plurality of laminations comprising one or more outer recesses (3), said method comprising the steps of:
a) combining said plurality of laminations (2) in an orderly manner by stacking along a longitudinal axis (X), in such a way that said one or more outer recesses (3) are aligned with each other so as to make one or more outer longitudinal grooves (4) for said component (1);
b) integrally and unremovably constraining said one or more laminations to each other so as to make said component (1);
**characterised in that** said step b) comprises the step b1) of distributing adhesive material (5) within said one or more outer longitudinal grooves (4) along said longitudinal axis (X) and **in that**, following said step b1), the step c) of heating said adhesive material applied during said step b1) is comprised, to activate its polymerisation, preferably said step c) is achieved by administration of ultraviolet radiation.

2. Method according to claim 1, **characterised in that** at least in said step b1) said longitudinal axis (X) is arranged vertically.

3. Method according to one or more of claims 1 to 2, **characterised in that** at least in said step b1) said longitudinal axis (X) is arranged horizontally.

4. Method according to one or more of the preceding claims, **characterised in that** said adhesive material comprises UV anaerobic glue or UV epoxy acrylic glue.

5. Method according to one or more of claims 1 to 4, wherein said longitudinal axis (X) is barycentric, **characterised in that**, after said step b1) and before said step c), step d) of angularly rotating said component (1) around said barycentric longitudinal axis (X) for said component (1) is comprised, from a first angular position (A0), in which said step b1) takes place, to at least one second angular position (A1,A2,A3), which is different from said first position (A0) in which said step c) takes place, said rotation preferably taking place intermittently in such a way that in said first angular position (A0) and in said at least one second angular position (A1,A2,A3), the rotation of said component (1) is interrupted.

6. Method according to claim 5, **characterised in that** the number of second angular positions (A1,A2,A3) reached by said component (1) during said step c) is equal to the number of said one or more longitudinal grooves (4) decreased by one, said step c) being preferably completed upon reaching all the second angular positions of said one or more second angular positions (A3).

7. Method according to claim 6, **characterised in that** said first angular position (A0) is facing upwards, said first angular position (A0) being preferably arranged at the angle of rotation for said component in which a vertical plane (L) passes through said barycentric longitudinal axis (X) and in which said vertical plane (L) symmetrically divides said at least one groove (4) of said one or more grooves in which said step b1) takes place.

8. Method according to one or more of claims 1 to 4, wherein said plurality of laminations of said electric-motor component comprises an upper lamination (1a) and a lower lamination (1b), **characterised in that** said step b1) and said step c) take place, for each groove (4), starting from said upper lamination of said component until it reaches, along a linear path, said lower lamination of said component, or vice versa, preferably all the grooves of said one or more grooves of said component being subjected simultaneously to said step b1) and said step c).

9. Apparatus (100) for making an electric-motor component (1), preferably a stator, comprising a plurality of laminations (2) each having one or more outer recesses (3), said apparatus (100) comprising means for combining, in an orderly manner by stacking along a longitudinal axis (X), said laminations (2) of said plurality of laminations in such a way that said one or more outer recesses (3) are aligned with each other so as to make one or more outer longitudinal grooves (4) for said component (1), and means (102) for integrally and unremovably constraining said one or more laminations (2) to each other in such a way as to make said component (1) for said electric motor, said apparatus (100) being **characterised in that** said constraining means (102) comprise at least one distributing device (103) for distributing adhesive material within said one or more outer longitudinal grooves (4) along said at least one longitudinal axis (X), and **in that** said apparatus (100) comprises heating means (105) for heating said adhesive material distributed within said one or more longitudinal grooves (4), preferably said heating means (105) comprise one or more ultraviolet lamps (105a).

10. Apparatus according to claim 9, **characterised by** comprising a number of distributing devices (103) equal to the number of said grooves (4).

11. Apparatus according to claim 9 or 10, **characterised in that** the number of said one or more ultraviolet lamps (105) is at least equal to the number of said grooves (4), at least one ultraviolet lamp of said one or more ultraviolet lamps (105) being combined with the respective groove.

12. Apparatus according to one or more of claims 9 to 11, wherein said plurality of laminations of said electric-motor component (1) comprises an upper lamination (1a) and a lower lamination (1b), **characterised by** comprising one or more assembling units (150) in a number equal to said one or more grooves, each assembling unit being combined with a groove (4) and comprising at least one distributing device (103) and at least one ultraviolet lamp (105), said at least one distributing device (103) and said at least one ultraviolet lamp (105) being integrally constrained to said assembling unit (150) and being oriented in the direction of said groove (4), said apparatus (100) further comprising sliding means (160) for sliding each assembling unit (150) parallel to the groove (4) with which it is combined, starting from said upper lamination (1a) of said component until it reaches, along a linear path, said lower lamination (1b) of said component, in such a way that said distributing device (103) can distribute said adhesive material within said at least one groove and said at least one ultraviolet lamp (105) can polymerise said adhesive material distributed while said assembly unit slides along said groove, preferably said at least one ultraviolet lamp being arranged above said distributing device for distributing adhesive material.

13. Apparatus according to claim 12, **characterised in that** said sliding means (160) comprise, for each assembling unit (150), at least one guide (161) and at least one carriage (162) sliding along said guide (161), each assembling unit (150) being integrally constrained to the respective carriage (162).

14. Apparatus according to claim 9, wherein said longitudinal axis (X) is barycentric, **characterised by** comprising rotation means for angularly rotating said component (1) around said barycentric longitudinal axis (X) for said component, from a first angular position (A0), in which said at least one distributing device (103) for distributing adhesive material distributes adhesive material in said one or more grooves (4) along said longitudinal axis (X), and at least one second angular position (A1,A2,A3), which is different from said first angular position (A0), in which said heating means (105) heat said adhesive material applied in said first angular position (A0) to assist its polymerisation.

15. Apparatus according to claim 14, **characterised in that** said rotation means operate intermittently, by interrupting the rotation at said first angular position (A0) and at said at least one second angular position (A1,A2,A3).

16. Apparatus according to claim 14 or 15, **characterised in that** the number of said ultraviolet lamps (105a) is preferably equal to the number of said one or more grooves (4) decreased by one, each of said ultraviolet lamps (105a) being arranged at the respective second angular position of said one or more second angular positions (A1,A2,A3).

17. Apparatus according to one or more of claims 14 to 16, **characterised in that** said barycentric rotation axis (X) is arranged horizontally or vertically.
